Europäisches Patentamt

European Patent Office

Office européen des brevets

(19)

(11) **EP 1 592 202 A1**

(12) **EUROPEAN PATENT APPLICATION**

(43) Date of publication:
**02.11.2005 Bulletin 2005/44**

(51) Int Cl.⁷: **H04L 29/06**, H04K 1/00

(21) Application number: **05252659.7**

(22) Date of filing: **28.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Wang, Yi-Sheng**<br>**Rockville, Maryland 20850 (US)** |
| (30) Priority: **30.04.2004  US 566370 P** | (74) Representative: **Davies, Simon Robert**<br>**D Young & Co**<br>**120 Holborn**<br>**London, EC1N 2DY (GB)** |
| (71) Applicant: **Glocom, Inc.**<br>**Germantown, Maryland 20874 (US)** | |

(54) **Secure communication system and method**

(57)    A method of initiating a secure call between a first secure terminal unit and a second secure terminal unit over a digital transmission link, the first secure terminal unit being connected to a first secure interface unit and the second secure terminal unit being connected to a second secure interface unit, includes transmitting a switching initiate request from the first secure interface unit to the second secure interface unit, returning a switching acknowledgement from the second secure interface unit to the first secure interface unit in response to the switching initiate request, and transmitting a first control message packet from the first secure interface unit to the second secure interface unit.

FIG. 1

**Description**

**Field of the Invention**

The present invention relates to secure communication, such as relating to a system providing secure communication between U.S. Government developed Secure Terminal Units-III (STU-III) over narrow bandwidth communication channels.

**Background of the Invention**

Methods of secure communication over narrow bandwidth or low bit rate communication channels are known, such as that described in U.S. Patent Number 5,963,621. These systems utilize a series of signals so that the STU-III terminals can be synchronized in a secure mode over the low bit rate channel. As secure traffic grows and new satellite systems are implemented, such as, for example, Inmarsat, Ltd.'s broadband global digital data service (BGAN), improvements in secure communication systems and methods are desirable.

**Summary of the Invention**

The invention is defined in the appended claims.

In one general aspect, a method of initiating a secure call between a first secure terminal unit and a second secure terminal unit over a digital transmission link with a narrow bandwidth, the first secure terminal unit being connected to a first secure interface unit and the second secure terminal unit being connected to a second secure interface unit, includes transmitting a switching initiate request from the first secure interface unit to the second secure interface unit, returning a switching acknowledgement from the second secure interface unit to the first secure interface unit in response to the switching initiate request, and transmitting a first control message packet from the first secure interface unit to the second secure interface unit if the switching acknowledgement is received by the first secure interface unit.

Embodiments may include one or more of the following features. For example, the method may include detecting a first tone signal sent to the first secure interface unit from the first secure terminal unit. Transmitting the control message packet includes transmitting the control message packet in response to the switching acknowledgement if the first secure interface unit detects the first tone signal.

The method may further include detecting a first tone signal sent to the first secure interface unit from the first secure interface unit and processing the first tone signal by the secure interface unit to produce a secure transmission request bit. Transmitting the control message packet includes transmitting the control message packet in response to the switching acknowledgement if the secure transmission request bit is present.

The method may also include switching the second secure interface unit from a normal mode to a secure mode after returning the switching acknowledgement from the second secure interface unit to the first secure interface unit. The first secure interface unit switches over from a normal mode to a secure mode in response to the switching acknowledgement.

As another feature, the method may include sending a regenerated first tone signal from the second secure interface unit to the second secure terminal unit in response to the switching initiate request and detecting the regenerated first tone signal by the second secure terminal unit, receiving a second tone signal sent from the second secure terminal unit to the second secure interface unit in response to the regenerated first tone signal, and transmitting a second control message packet from the second secure interface unit to the first secure interface unit in response to the second tone signal. The method may also include sending a regenerated second tone signal from the first secure interface to the first secure terminal unit in response to the second control message packet.

As another feature, the method may include detecting termination of the first tone signal by the first secure interface unit, changing the first control message packet to a third control message packet in response to the detected termination of the first tone signal, transmitting the third control message packet from the first secure interface unit to the second secure interface unit, and terminating the regenerated first tone signal from the second secure interface unit to the second secure terminal unit in response to the third control message packet.

The method may further include receiving a first scramble signal sent from the second secure terminal unit to the second secure interface unit in response to the termination of the regenerated first tone signal, transmitting a fourth control message packet from the second secure interface unit to the first secure interface unit in response to the first scramble signal, regenerating the first scramble signal by the first secure interface unit in response to the fourth control message packet, and sending the regenerated first scramble signal from the first secure interface unit to the first secure terminal unit.

The method may also include detecting a dropped carrier by the second secure terminal unit after the first scramble signal, changing the fourth control message packet to the third control message packet in response to the dropped carrier, transmitting the third control message packet from the second secure interface unit to the first secure interface unit, and dropping a carrier signal from the first secure interface unit to the first secure terminal unit in response to the third control message packet.

In addition, the method may include detecting the first tone signal sent from the first secure terminal unit to the first secure interface unit in response to the dropped carrier signal from the first secure interface unit, encoding the first control signal as the first control message packet by the first secure interface unit, transmitting the first control message packet from the first secure interface unit to the second secure interface unit, regenerating the first tone signal by the second secure interface unit in response to the first control message packet, and sending the regenerated first tone signal from the second secure interface unit to the second secure terminal unit.

The method may also include receiving a second scramble by the first secure interface unit sent from the first secure terminal unit upon completion of the first tone signal, transmitting a fifth control message packet from the first secure interface unit to the second secure interface unit in response to the second scramble signal, regenerating the second scramble signal by the second secure interface unit in response to the fifth control message packet, and sending the regenerated second scramble signal from the second secure interface unit to the second secure terminal unit.

As a further feature, the method may include transmitting a single sixth control message packet from the first secure interface unit to the second secure interface unit, transmitting demodulated data from the first secure interface unit to the second secure interface unit using a first data frame after transmitting the single sixth control message packet, remodulating the data by the second secure interface unit in response to the single sixth control message packet, and sending the remodulated data from the second secure interface unit to the second secure terminal unit.

The method may also include receiving the first scramble signal sent from the second secure terminal unit to the second secure interface unit in response to termination of the second scramble signal, sending the fourth control message packet from the second secure interface unit to the first secure interface unit in response to the first scramble signal, regenerating the first scramble signal by the first secure interface unit in response to the fourth control message packet, and sending the regenerated first scramble signal from the first secure interface unit to the first secure terminal unit. A single seventh control message packet is then transmitted from the second secure interface unit to the first secure interface unit to synchronize the transition to transmitting demodulated data in a second data frame. The method may be implemented by hardware, software, or a combination thereof.

In another general aspect, a secure terminal unit providing secure communication between a local STU-III terminal and a remote STU-III terminal over a digital communication link includes a receiver configured to receive a switching acknowledgement in response to a switching initiate request, an interface configured to receive a tone signal from the local STU-III, a processor configured to produce a transmission request bit in response to the tone signal and to produce a control message packet in response to the switching acknowledgement if the transmission request bit is present, and a transmitter configured to transmit the switching initiate request and the control message packet over the digital communication link. Embodiments may include one or more of the features mentioned above.

In another general aspect, software utilized by a computer, such as, for example, an embedded microprocessor, includes a first code segment producing a secure communication initiate request, a second code segment identifying a secure communication switching acknowledgement in response to the secure communication switching request, a third code segment producing a secure transmission request bit in response to a secure transmission tone signal, and a fourth code segment producing a control message packet acknowledging identification of the secure communication switching acknowledgement if the transmission request bit is present. Embodiments may include one or more of the features listed above.

### Brief Description of the Drawings

Various embodiments of the invention will now be described in detail by way of example only with reference to the accompanying drawings:

FIG. 1 is a general block diagram showing a network configuration according to one embodiment of the present invention.
FIG. 2 is a block diagram of a secure interface unit (SIU) and a Secure Terminal Unit III (STU-III).
FIG. 3 is a block diagram showing a switching function of the SIU.
FIG. 4 is a flowchart illustrating initiation and establishment of a secure call.
FIG. 5 is a state diagram illustrating detection and/or initiation of a secure call.
FIG. 6 is a timing diagram of a full duplex call sequence.
FIG. 7 is a timing diagram of a half duplex call sequence.
FIG. 8 is a timing diagram of a full duplex to half duplex call sequence.

## Detailed Description

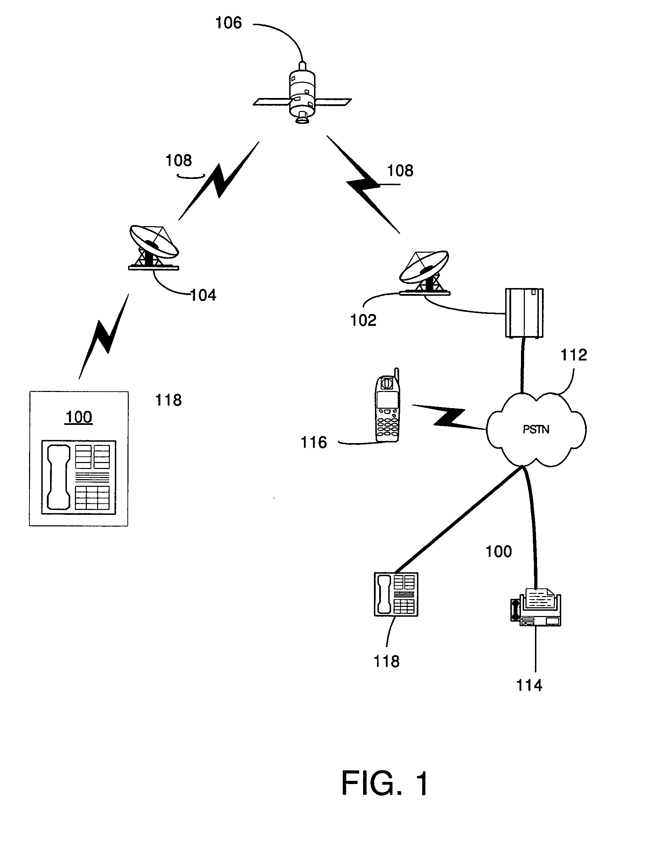

FIG. 1 shows a general network configuration that includes a Land Earth Station 102 connected to a Mobile Earth Station 104 via a satellite 106 providing a communication link 108. As shown in FIG. 1, a Public Switched Telephone Network (PSTN) 112 connects POTs (Plain old Telephones) 114, cellular telephones 116 and STU-III terminals 118 to the Land Earth Station 102. Another STU-III terminal 118 is directly connected to the Mobile Earth Station 104 which may be a mobile unit, for example, on a ship, or an airplane.

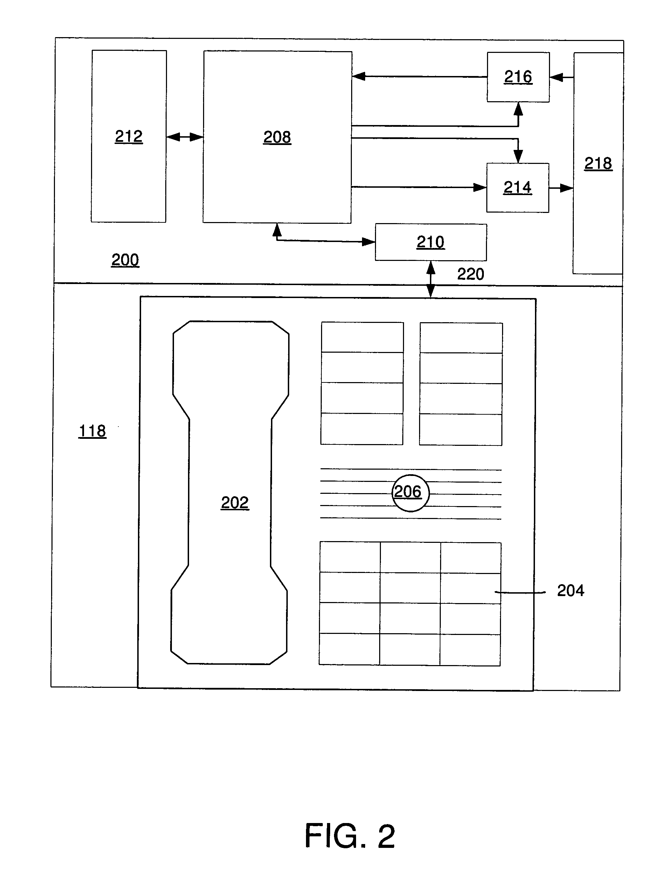

As shown in FIG. 2, the STU-III terminal 118 is connected to the SIU 200. The STU-III terminal includes a handset 202 and a keypad 204. A separate call button 206 can be depressed to initiate a secure call.

The SIU 200 includes a digital signal processor 208 connected to the STU-III terminal 118 by a telephone interface 210. The digital signal processor 208 utilizes a memory or storage device 212 and communicates with a transmit module 214 and a receive module 216 that attach to a terminal 218.

Typically, the STU-III terminal 118 is connected to the SIU 200 by a communication jack 220. In another implementation, the components of the SIU 200 are integrated into a secure terminal unit and/or SIUs can be located at the Land Earth Station 102 or the Mobile Earth Station 104.

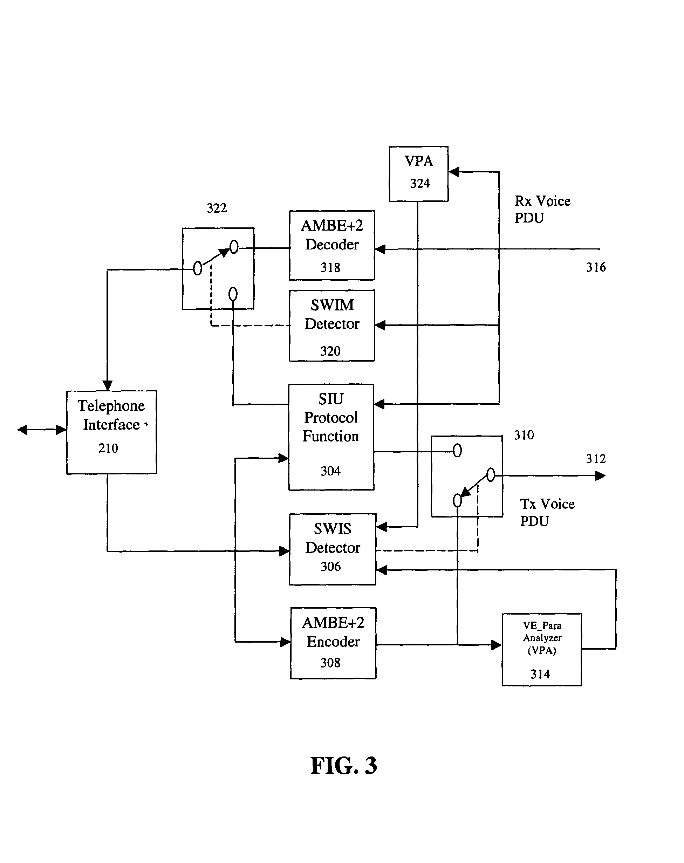

FIG. 3 shows a block diagram of the switching architecture of the SIU 200. The telephone interface 210 is connected to a secure interface unit (SIU) protocol function 304, a switch-in signal (SWIS) detector 306, and an AMBE+2 encoder 308. A transmit switch 310 toggles between connecting the output of the SIU protocol function 304 or the output of the ABME+2 encoder 308 to a transmission output terminal 312.

For normal voice transmission and other non-secure communication, the transmission switch 310 connects the AMBE+2 encoder 306 to the transmission output terminal 312. The input to the AMBE+2 encoder is an analog voiceband signal and its output is a baseband data signal. In other implementations, the voice encoder may utilize another algorithm such as, for example, AMBE or AMBE+.

The SWIS detector 306 monitors the signal from the telephone interface 210, continuously looking for a 2100 Hz Echo Suppressor Disable (ESD) tone or a 2100 Hz Echo Suppressor/Canceller Disable (ESCD) tone, which tones signal a desire to initiate a secure call. Once either the ESD or ESCD signal are detected, the transmit switch connects the SIU protocol function 304 to the transmission output terminal 312. The AMBE+2 encoder 308 is disconnected and may cease operation to conserve processing resources.

A Voice Encoder Parameter Analyzer 314 (VPA) samples the output of the AMBE+2 encoder 308 is an additional input to the SWIS detector 306. Processing of the ESD or ESCD signals by the AMBE+2 encoder 308 produces an output signal having a predetermined parameter pattern, which corresponds to the ESD/ESCD input at the voice encoder. For example, let the predetermined parameter pattern template be: P1, P2, ... Pn, and the AMBE+2 encoder output for the $i^{th}$ frame is p1(i), p2(i), ... pn(i), the weighted error vector will be

$$E(i) \;=\; \sum_{j=1}^{n} w_j * |\, p_j(i) - P_j \,| \,.$$

A decision value can be derived based on taking average of E(i) over N frames together with a threshold THD.

$$D_{ESD/ESCD} = \begin{cases} 1, & \text{if } 1/N\left(\sum_{i=0}^{N} E(i)\right) > THD \\[2em] 0, & \text{Else} \end{cases}$$

Where $P_j$'s, $w_j$'s, N and THD are empirical values depending on the specific family member of the AMBE voice coder.

The decision $D_{ESD/ESCD}$ is incorporated in the SWIS Detector module as a complimentary measure to the detection algorithm, which is based on the input VF signal from the telephone interface. For example, detection of the predetermined parameter pattern causes the VPA 314 to pass a secure transmission request bit to the SWIS detector 306. Thus, if detection of the ESD or ESCD signals is ambiguous due to weak or poor transmission quality, the SWIS detector 308 can verify that a secure transmission is desired from the VPA's 314 output of the secure transmission request signal.

In one implementation, the verification process requires that the SWIS detector 306 detect both the ESD/ESCD signal and the secure transmission request bit. In another implementation, the SWIS detector 306 initiates a secure call if either of the ESD/ESCD signal or the secure transmission request bit is present. In a further implementation, the SWIS detector 306 uses the determination as to whether the secure transmission request bit is present only if the ESD/ESCD signal detection is ambiguous.

A receive terminal 316 is connected to an AMBE+2 decoder 318, a switch-in message (SWIM) detector 320, and the SIU protocol function 304. A receive switch 322 toggles between connecting either the output of the AMBE+2 decoder 318 or an output of the SIU protocol function 304 to the telephone interface 210.

The AMBE+2 decoder 318 produces an analog voiceband signal from a data signal which is received from the satellite. The SWIM detector 320 monitors the data signal at the receive terminal 316. If the remote STU-III terminal starts to go to a secure mode, the remote SIU will detect the transition and translate ESD/ESCD tones into an Alternate Service Switch-In Message. Detection of the Alternate Service Switch-In Message by the SWIM detector 320 causes the receive switch 322 to disconnect the AMBE+2 Decoder 318 and to connect the SIU protocol function 304.

Another VPA 324 monitors the receive terminal 316 for when the remote AMBE+2 is fed with the ESD/ESCD tone signal. The output of the VPA 324 is connected to the SWIS detector 306. Thus, when the predetermined parameter pattern with the unique characteristic is detected at the receive terminal 316, the VPA 324 raises a flag bit to the SWIS Detector. When this flag bit is received, the SWIS detector 306 defers its decision to switch to secure mode. This prevents the SIUs at both ends from simultaneously attempting to switch to secure mode thereby causing a double switching problem. Such verification process can be achieved by implementations similar to those described above with respect to the VPA 314.

The functions performed by the transmit switch 310 and the receive switch 322 are described in terms of hardware as physical switches, however, the switching operations may be implemented in software or in a combination of hardware and software.

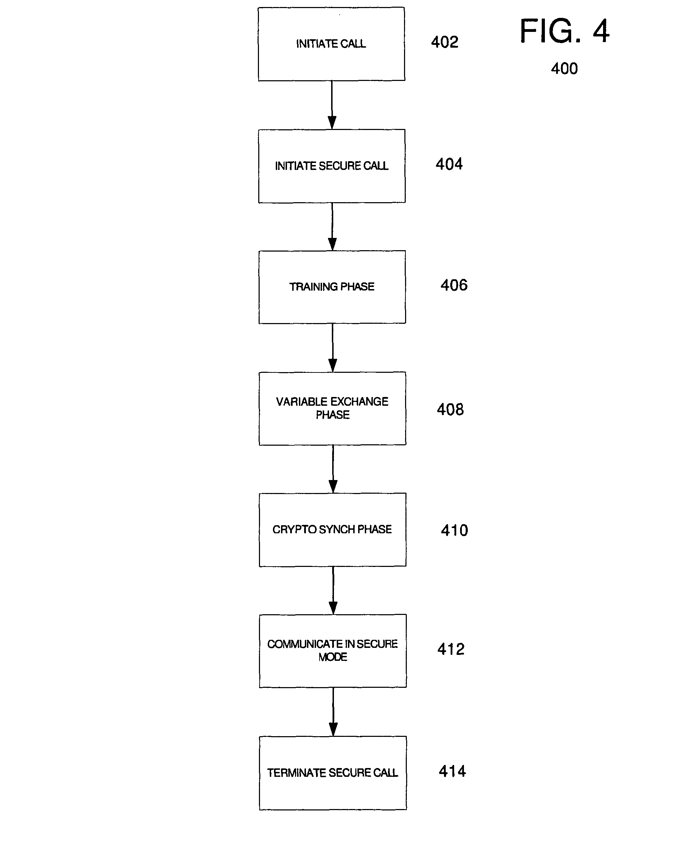

Operations involved in initiation and termination of the secure call are illustrated in FIG. 4. In operation 402, a user initiates a telephone call in an unencrypted clear voice mode. In operation 404, the user at either end takes an action to instruct the STU-III terminal to initiate a secure call. In operation 406, the STU-III terminals enter an initial call/modem training phase in which the modems exchange data rate information and training sequences. Once the modems are trained, the STU-IIIs enter a variable exchange phase in operation 408. This is followed by a crypto sync/resync phase, in which the two crypto units in the STU-III terminals acquire synchronization to each other in operation 410. Once this is achieved, the secure communication path between the two STU-III terminals is complete and users may communicate in a secure mode in operation 412. In operation 414, the secure connection is terminated and a clear voice mode telephone conversation may continue.

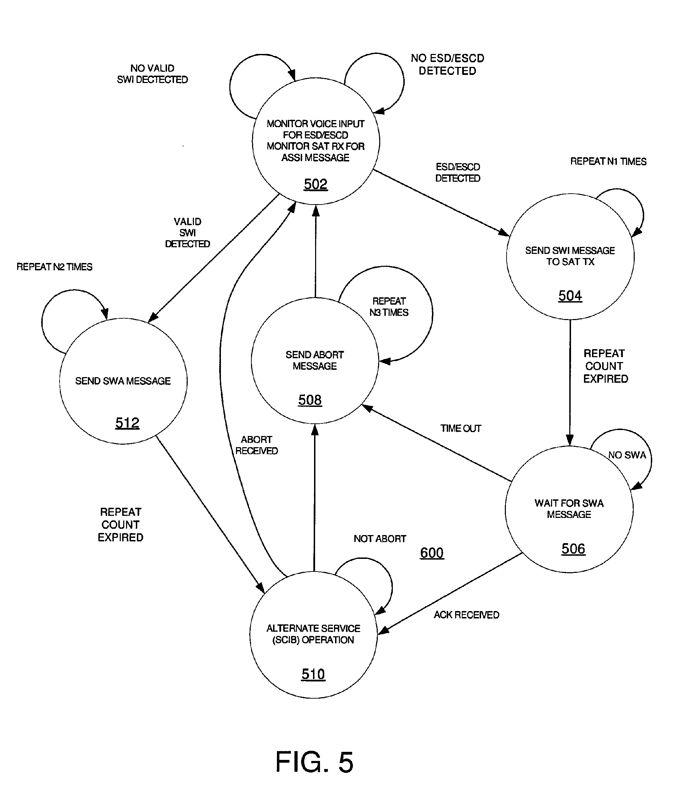

FIG. 5 shows a state diagram for establishing a secure call from an initial state of operation in a POTS mode. In state 502, the SIU monitors outgoing voice transmission to detect ESD or ESCD signals. If either the ESD or the ESCD signal is detected in two consecutive error free frames, in state 504 the SIU transmits a secure service switch-in (SWI) message over the satellite link to the remote SIU. The SWI message transmission is then repeated n times by the SIU. For example, the SWI message may be repeated for 10 frames.

Once the repeat count has expired, the SIU waits for a switch-in acknowledgement (SWA) message in state 506. If the initiating SIU receives the SWA message prior to expiration of the time out period, the initiating SIU goes into alternative service operation at state 510.

If the SIU does not receive the SWA message within a time out period, the SIU sends an alternative service termination (abort) message in state 506. For example, the abort message may be 114 frames of all ones repeated N3 times. Once the abort message is completed, the initiating SIU goes back to state 502 to monitor outgoing voice transmission for the ESD/ESCD signals.

In state 502, the SIU also monitors the received satellite signal for an SWI message from the remote SIU. If a valid SWI message from the remote SIU is detected in two consecutive error free frames, the SIU sends the SWA message N2 times in state 512. Once the repeat count has expired, the SIU begins alternate service operation in state 510. The SIU monitors the received signal for an abort message and maintains alternate service operation unless the abort message is received. If the abort message is received, the SIU goes to state 502 and continues monitoring outbound transmission of the ESD/ESCD signals or inbound receipt of the SWI message from the remote SIU.

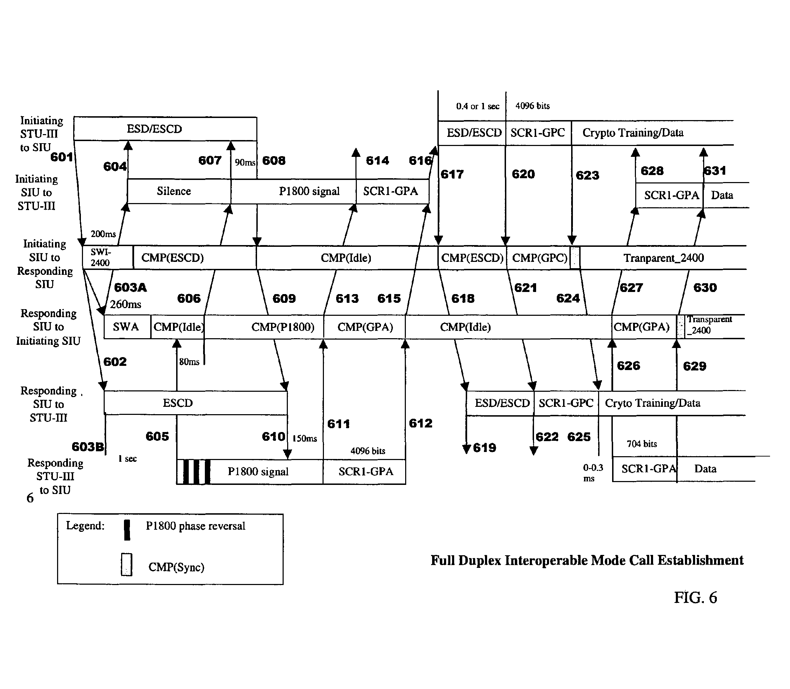

FIG. 6 is an illustration of a timing diagram for establishment of a secure call in full duplex interoperable mode. The initiating STU-III generates the 2100 Hz ESD/ESCD signal 601, which indicates that the user desires to initiate a secure call.

The SWIS detector at the initiating SIU detects the ESD/ESCD signal with the assistance of the VAP, which analyses and detects a unique output from the AMBE+2 vocoder due to the ESD/ESCD signal input. In response, the initiating SIU transmits an SWI message 602 to the responding SIU. The initiating SIU then remains in voice mode and waits for a response from the responding SIU. The initiating SIU transmits 10 frames of the SWI message and then the initiating SIU changes to a CMP(ESCD) message, which is transmitted in consecutive frames so long as an ESD/ESCD signal is detected.

The initiating SIU starts a timer 1.3 seconds after transmitting the first SWI-2100 message. At the end of this time period, if the initiating SIU does not receive a response from the remote SIU, the initiating SIU abandons the attempted mode switch and sends an abort signal (not shown) to the initiating STU-III. It then stops the abort signal and returns to voice mode once the ESD/ESCD signal is terminated.

In response to the SWI-2100 message that the responding SIU receives from the initiating SIU, the responding SIU transmits an SWA message 603A to the initiating SIU to acknowledge receipt of the SWI-2100 message and regenerates the ESCD signal 603B which is sent to the responding STU-III. After sending 13 frames of the SWA message the responding SIU takes over control of the AMBE+2 vocoder and operates in secure mode and starts transmitting CMP(Idle) packets to the initiating SIU.

When the initiating SIU receives the SWA message, it takes over control from the AMBE+2 vocoder and outputs silence 604 to the telephone interface. The initiating SIU changes operating mode from clear communication to secure communication. After completion of the mode switch, the signal sequence proceeds to establish a full duplex secure call.

The responding STU-III detects the ESCD signal and after 1 second sends a Pseudo 1800 (P1800) signal 605 to the responding SIU. The STU-III can select either an interoperable mode (2.4 kbit/s) or alternate modes (4.8 or 9.6 kbit/s). The STU-III uses the P1800 signal 605 to indicate its attempt to diverge from the interoperable mode. This is done by inserting 3 phase reversals to at 32, 64, and 96 dibit positions in the beginning of the P1800 signal 605. The responding SIU ignores the STU-III's indication of its capability of operation modes other than the interoperable mode, because the SIU supports only the interoperable mode.

The responding SIU demodulates the P1800 signal 605 and detects the dibit data within 80 ms from the start of the P 1800 signal 605. The responding SIU changes the CMP(Idle) packet that it has been transmitting to the initiating SIU to CMP(1800) packets. After receiving the CMP(P1800) packets, the initiating SIU sends a regenerated P 1800 signal 607 to the initiating STU-III by modulating the dibit pattern.

The initiating STU-III terminates the ESC/ESCD tone within 90 ms after receiving the regenerated P1800 signal 607. The initiating SIU detects the absence 608 of the ESC/ESCD tone and changes the message that it is transmitting to the satellite channel from the CMP(ESCD) to CMP(Idle) message 609. The responding SIU detects the transition from the CMP(ESCD) to the CMP(Idle) message and terminates the ESCD tone to the responding STU-III 610.

Within 150 milliseconds of detecting the end of the ESCD tone, the responding STU-III terminal transmits a SCR1(GPA) signal sequence 611 to the telephone interface. The SCR1(GPA) signal is generated by a 23-bit GPA scrambler that is seeded by a seed vector. After completing the SRC1(GPA) signal, the responding STU-III drops the carrier 612.

The responding SIU detects the end of the P1800 dibit pattern and the start of the SCR1(GPA) signal. The responding SIU trains its demodulator equalizer using the SCR1(GPA) signal. In response to the SCR1(GPA) signal, the responding SIU terminates the CMP(1800) packet and starts transmitting a CMP(GPA) packet to the satellite channel 613.

The initiating SIU regenerates the SCR1(GPA) signal and sends it to the initiating STU-III terminal 614. The regenerated SCR1(GPA) is used to train the initiating SIU's echo canceller and the initiating STU-III terminal's equalizer.

When the responding SIU detects the dropped carrier 612 from the responding STU-III, the responding SIU changes the message to the satellite channel from the CMP(GMP) message to the CMP(Idle) 615. Consequently, the initiating SIU drops the carrier 616 at the completion of the regenerated SCR1-GPA.

The initiating STU-III detects the loss of carrier at the end of the SCR1-GPA signal and returns an ESD/ESCD tone that is sent to the initiating SIU 617. The initiating SIU receives the ESD/ESCD tone and transmits a CMP(ESCD) message to the responding SIU 618. The responding SIU regenerates the 2100 Hz ESCD tone and sends it to the telephone interface 619.

Following the ESD/ESCD tone, the initiating STU-III transmits the SCR1-GPA signal to the telephone interface 620. The initiating SIU demodulates the SCR1-GPA signal and changes the outgoing message to the satellite channel from CMP(ESCD) to CMP(GPC) 621. The initiating SIU demodulator uses the signal to train its demodulator equalizer.

The responding SIU regenerates the SCR1-GPC signal and sends it to the responding STU-III 622. The responding SIU uses this signal to train its echo canceller while the responding STU-III uses the SCR1-GPC signal to train its equalizer. Following the completion of the SCR-GPC sequence, the initiating STU-III enters the Variable Exchange and proceeds to Crypto Sync/Resync and subsequent data phases 623. The initiating SIU transmits demodulated 2.4kbit/s data to the satellite channel using the Transparent_2400 data frame 624. The initiating SIU transmits inserts one frame of CMP(Sync) message in between the CMP(GPC) and the first Transparent_2400 frame and adjusts the pointers of its transmit slippage control buffer.

The responding SIU receives the single CMP(Sync) frame and adjusts the pointers of its receive slippage control buffer. When it receives the Transparent_2400 data frames, the responding SIU remodulates the received data and sends it to the telephone interface 625.

Within 300 ms after the responding STU-III detects the end of the SCR1-GPC signal, the responding STU-III begins transmission of a shorter (704 bits) SCRI-GPA sequence 626. The responding SIU demodulates the SCR1-GPA signal and transmits it to the initiating SIU as a CMP(GPA) message 627. The initiating SIU regenerates the SCR1-GPA signal and sends it to the telephone interface 628. The initiating STU-III uses the short SCR1-GPA to train its demodulator equalizer.

When the responding SIU detects the end of the SCR1-GPA signal 629, the responding SIU sends one frame of CMP(Sync), adjusts its transmit slippage control buffer pointers, and then switches to transmission of Transparent-2400 data frames 630. When the initiating SIU receives the CMP(Sync) frame, it adjusts its receive slippage control buffer. When the initiating SIU receives the subsequent Transparent_2400 data frames, the initiating SIU remodulates the data and sends it to the telephone interface 631.

At this point, establishment of the secure call is completed between the two STU-III terminals. The SIUs continue to demodulate the modem signal from the local STU-III, transmit data through the satellite channel by the Transparent_2400 data frames, and send the remodulated data to the local STU-III. The SIUs maintain the transparent channel for the STU-IIIs to proceed to subsequent phases of the secure call.

A training failure may result due to a "hand-up" condition caused by waiting for certain signals and/or messages. To avoid the hand-up condition, a set of time-out timers is utilized to branch the program execution to a predetermined abort state as follows:

| Failure | Init/Resp SIU | Detection Criteria |
|---|---|---|
| No response to SWI | Init SIU | 1.3 sec after sending SWI |
| Init. ESD/ESCD tone lost | Resp SIU | Detect P1800 and CMP(ESCD) before P1800 received |
| No CMP(P1800) received | Init SIU | 3 sec after SWA received |
| No CMP(GPA) or CMP(Idle) received after CMP (P1800) | Init SIU | 2 sec after P1800 received |
| No CMP(Sync) received | Init SIU | 6 sec after ending of CMP(P1800) |
| No 1st CMP(Idle) received | Resp SIU | 3 sec after SWI received |
| No CMP(Sync) received | Resp SIU | 4 sec after 1st CMP(Idle) |
| No 2nd SCR1 sequence received from local SIU-III | Resp SIU | 2 sec after CMP(GPC) received |
| Lost message sync | Both | 10 sec invalid message frame sync (after sync established) |

The SIUs monitor the modem carrier on the telephone interface for call interruptions. If a loss of modem carrier for 100 ms or more is detected, the SIU immediately drops the modulated carrier to the local STU-III and transmits an Abort message to the remote SIU. After completing the Abort message, the SIU starts the process of returning to clear communication in both directions.

The SIUs continuously monitors the bidirectional data transferred by the Transparent_2400 message. If the total number of 1 bits in 48 bits of the Transparent_2400 message contains less than 1176 (98%) for 25 consecutive messages (1200 bits), then the SIU considers this to be an Abort message and terminates the secure operation as described above.

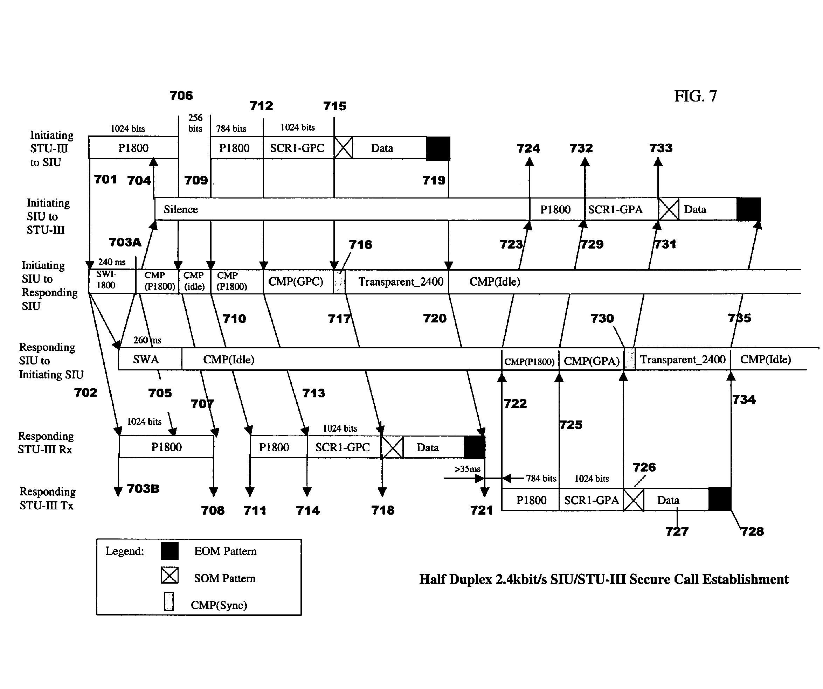

FIG. 7 is a timing diagram showing establishment of a half duplex call. The initiating STU-III transmits a Pseudo-1800 Hz (P1800) signal (701) instead of the ESD/ESCD tone as described by timing signal 601 for the full duplex call establishment. The initiating SIU detects the P1800 signal and transmits out an SWI-1800 message (702) to the responding SIU.

Upon receiving the SWI-1800 signal, the responding SIU transmits an SWA message over the satellite channel to the initiating SIU (703A) and sends a P 1800 VF signal to the responding STU-III (703B) through the telephone interface.

After receiving the SWA message (703A), the initiating SIU switches to half duplex secure communication mode and outputs silence to the telephone interface (704). The initiating SIU continues to monitor the P1800 signal from the STU-III and after transmitting 12 frames of the SWI-1800 message (702), the initiating SIU transmits CMP (P1800) packets over the satellite channel to the responding SIU (705).

After sending 1024 bits of the P1800 signal, the initiating STU-III drops the carrier (706). When the initiating SIU detects the dropped carrier, it changes the message to the satellite channel from CMP(P1800) to CMP(idle) (707). The responding SIU detects the CMP(idle) and stops sending the P1800 VF signal to the telephone interface (708).

After a period of carrier off for 256 bits or 107 ms, the initiating STU-III restarts the P1800 signal (709). Upon receiving the P1800 signal (709), the initiating SIU changes its output message from CMP(Idle) to CMP(P1800) (710). When the responding SIU detects the change in message from CMP(Idle) to CMP(P1800) (710), the responding SIU resumes regeneration of the P1800 VF signal (711).

After 784 bits of the P1800 signal, the initiating STU-III starts transmitting the SCR-GPC signal (712), which is used to train the initiating SfU's equalizer. When the initiating SIU detects the end of the P1800 signal and the start of the SCR1-GPC signal, the initiating SIU changes the message to the satellite channel from the CMP(P1800) signal to the CMP(GPC) signal (713). When the responding SIU detects the change from CMP(P1800) to CMP(GPC), the responding SIU changes its output to the telephone interface to begin sending a regenerated SCR-GPC signal (714).

After sending 1024 bits of the SCR1-GPC signal, the initiating STU-III starts the data section of the half duplex transmission (715). The data section is encapsulated by SOM and EOM control data patterns at each end of the data section, respectively. When the SOM data pattern is detected, the initiating SIU stops the CMP(GPC) message and transmits a single CMP(sync) message frame (716) and then transmits Transparent_2400 data frames to the satellite channel (717).

When the responding SIU detects the transition to CMP(sync) message and then to the Transparent_2400 data frames, the responding SIU stops sending the SCR1-GPC sequence, realigns the pointers of the slippage control buffer, and begins sending remodulated data from the Transparent_2400 frames to the responding STU-III (718).

When the initiating SIU detects the EOM data pattern and loss of carrier from the initiating STU-III (719), the initiating SIU begins transmitting a CMP(Idle) packet within 20 ms of the dropped carrier (720). The responding SIU detects the transition from the Transparent_2400 signal to the CMP(Idle) packet and drops the carrier within 20 ms after completing the EOM data pattern (721).

After detecting the loss of carrier following the EOM, the responding STU-III waits for at least 35 ms and then begins to transmit its first half duplex call initiation message with a P1800 signal of 784 bits (722). The responding SIU detects and demodulates the P1800 signal and changes its outgoing message to the satellite channel from CMP(Idle) to CMP(P1800) (723). When the initiating SIU detects the CMP(P1800) message from the satellite channel, the initiating SIU sends a regenerated P1800 VF signal to the initiating STU-III (724).

Following the P1800 signal, the responding STU-III begins transmission of the SCR1-GPA signal (725), the SOM data pattern (726), the data traffic (727), and the EOM data pattern (728) to the responding SIU. The responding SIU detects the signal sequence from the telephone interface and the responding SIU begins transmitting the CMP (GPA) (729), CMP(Sync) (730), and the Transparent_2400 data frames (731) to the initiating SIU. In turn, the initiating SIU regenerates the VF signal (732) and remodulates the signal with the data traffic (733) carried by the Transparent_2400 data frames.

The responding SIU detects the end of the responding STU-III's transmission (734) and changes its outgoing message to the satellite channel from the Transparent_2400 frame to the CMP(Idle) message (735).

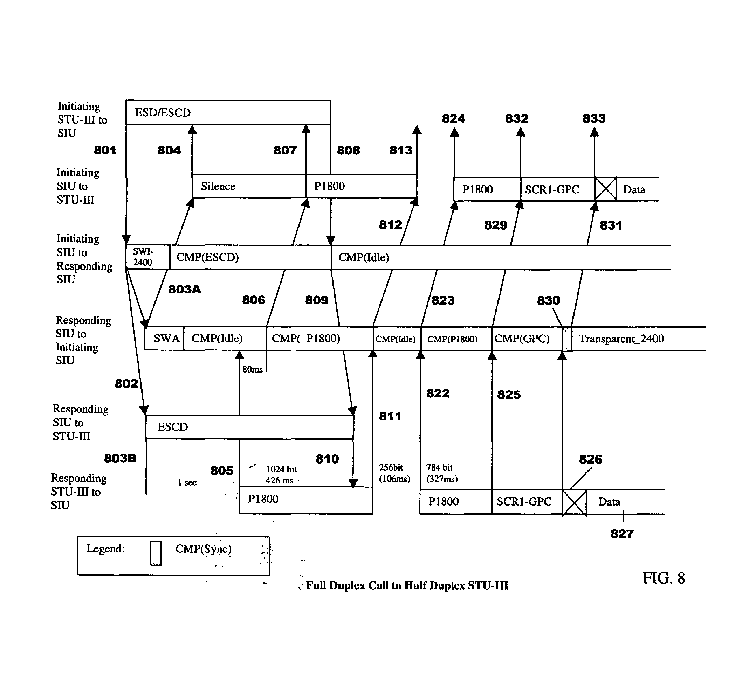

FIG. 8 is a timing diagram showing establishment of a full duplex to half duplex call. The full to half duplex call occurs when the Initiating STU-III starts a full duplex call but the Responding STU-III is configured in half duplex mode. The signal sequence is identical to the full duplex call sequence up to 610 as described with respect to FIG. 6. Thus, 801 to 810 in FIG. 8 correspond to 601 to 610 in FIG. 6, respectively.

While being configured in half duplex mode, the Responding STU-III terminates the P1800 signal and drops the carrier after 1024 bits (426 ms) of the P1800 signal (811) has been transmitted regardless of the state of the ESCD being received by the Responding STU-III. The loss of carrier after the P1800 signal signifies the transition from full duplex to half duplex operation.

The Responding SIU detects this event and changes the call sequence establishment from a full duplex to a half duplex call. The Responding SIU changes the message transmitted to the satellite channel from CMP(1800) to CMP(Idle) (812). When the Initiating SIU detects the switch of incoming message from CMP(P1800) to CMP(Idle), the Initiating SIU drops the carrier (813).

The call sequence continues as described in the half duplex call sequence as described in FIG. 7, with sequence 722 to 735 of FIG. 7 corresponding to 822 to 835 of FIG. 8, respectively.

Definitions & Acronyms

Acronyms, which may be used throughout the Specification, represent the following terms:

| | |
|---|---|
| ACKmsg | Acknowledgement message |
| Alternate Mode | STU-III 4800/9600 bits/s operation mode |

(continued)

| SWImsg | Alternate Service Switch-in message |
|---|---|
| AST | Alternate Service Transport |
| Dibit | Two bit sequence in QPSK modulation |
| EOM | End of Message |
| ESCD | Echo Suppressor/Canceller Disable |
| ESD | Echo Suppressor Disable |
| FSVS | Future Secure Voice System (STU program) |
| GPA | Modem scrambler for Initiating STU-III |
| GPC | Modem scrambler for Responding STU-III |
| Interoperable mode | STU-III 2400 bit/s operation mode |
| KMC | Key Management Center |
| KSps | Kilo Symbol per second |
| LES | Land Earth Station |
| MES | Mobile Earth Station |
| NACKmsg | Negative Acknowledgement Message |
| NSA | National Security Agency |
| POTS | Plain Old Telephone Service |
| PSTN | Public Switched Telephone Network |
| QoS | Quality of Service |
| SCR1 | Scrambled ones |
| SDM | Inmarsat System Definition Manual |
| SOM | Start of Message |
| STU-III | Secure Terminal Unit III |
| VF | Voice frequency |

Definitions for various message types and terms used throughout the Specification are defined as follows:

1. Voice/SCIB Switching Message Format
    This category includes three messages:

.    Full duplex secure service switch-in Indication (SWI-2100) message
.    Half duplex secure service switch-in Indication (SWI-1800) message
.    Acknowledgement (SWA) message

2. SWI-2100 Message Format
    The SWI message format is based on AMBE+2 encoded speech data frame format. The SWI-2100 shall be used by the SWIS detector to initiate the switch-in to a full duplex secure call when the 2100 Hz ESD/ESCD tone is detected from the telephone interface. The Initiating SCIB shall transmit 10 frames of SWI-2100 message.
3. SWI-1800 Message Format
    The SWI-1800 message format is based on AMBE+2 encoded speech data frame format. The SWI-1800 shall be used by SWIS detector to initiate the switch-in to a half duplex secure call when the 1800 Hz signal is detected from the telephone interface. The Initiating SCIB shall transmit 12 frames of SWI-1800 messages.
4. SWA Message Format
    The SWA message format is based on AMBE+2 encoded speech data frame format. The SWA message is used to acknowledge both the SWI-2100 and SWI-1800 messages by the Responding SCIB. The SWA message shall be transmitted consecutively for 13 frames.
5. Detection Criteria
    The detection criteria for SWI-2100, SWI-1800 and SWA are the same: The message is considered detected when two consecutive error free frames are received.
6. ABORT Message Format
    The ABORT message is the Alternative Service Termination message. It consists of a 114 frames of all ones. The SCIB shall output silence on the VF port while transmitting and receiving the ABORT message. The detection criterion of the ABORT message is a minimum of 98% of continuous ones received in a 25 consecutive frames (500ms). Following the detection of ABORT message, the SCIB shall wait until the end of the message and the drop of modem carrier before returning to clear communication mode.

7. SCIB Protocol Control Message Format

The SCIB protocol control messages are under the general structure of Control Message Packet (CMP). Each CMP occupies one voice frame (20 ms), and consists of 6 octets.

8. CMP(Idle)

This message does not indicates any events from the sender and requires no action of the receiver.

9. CMP(ESCD)

This message is used to indicate that an ESC/ESDC tone has been detected. The CMP(ESCD) shall be transmitted in consecutive frame as long as the ESD/ESCD tone is detected.

10. CMP(P1800)

This message is used to indicate to the remote SCIB the presence of P1800 signal at the local telephone interface. The CMP(P1800) shall be transmitted in consecutive frame as long as the P1800 signal is being demodulated from the local SCIB.

11. CMP(GPA)

This message is used to indicate to the remote SCIB the presence of SCR1-GPA signal at the local telephone interface. The CMP(GPA) shall be transmitted in consecutive frame as long as the SCR1-GPA signal is being demodulated from the local SCIB.

12. CMP(GPC)

This message is used to indicate to the remote SCIB the presence of SCR1-GPC signal at the local telephone interface. The CMP(GPC) shall be transmitted in consecutive frame as long as the SCR1-GPC signal is being demodulated from the local SCIB.

13. CMP(Sync)

The SCRsync message is sent for a single 20 ms frame only to synchronize the transition between SCIB message exchange and the transparent data frame (TRANPARENT_2400).

14. CMP Message Detection Criteria

All the CMP message detection criteria are the same, that is, when two consecutive error free messages are received; except for the CMP(Sync). The CMP(Sync) consists of only a single frame. To increase the robustness of the synchronization of the two peer SCIB, the detection of CMP(Sync) incorporates the message state information in the SCIB.

15. Transparent Data Frame (TRANSPARENT_2400)

The Transparent_2400 data frame contains 48 bits of secure data demodulated by the V.26bis demodulator. The MSB of the lowest order byte is the first bit be to sent or received and the LSB of the highest order byte is the last bit be to sent or received.

16. VF Signal Forma

The Voice Frequency (VF) signals concern in this SCIB protocol include:

· 2100Hz ESD/ESCD echo suppressor/canceller disable tone
· Pseudo 1800 Hz signal P 1800
· Scrambled Ones SCR1 (GPA)
· Scrambled Ones SCR1 (GPC)
· Start of Message (SOM)
· V.26bis Modulation scheme

17. 2100Hz ESD/ESCD

The ESD and ESCD signals are both 2100 Hz +/- 0.1 %. The difference is that the ESCD contain phase reversal every 450 +/- 25 ms. The STU-III terminal can be configured to use either of the signal. The SCIB is required to detect both of the signals but regenerate the ESCD signal only.

18. Pseudo 1800 Hz (P1800) Signal

The P 1800 signal consists of an 1800 Hz tone generated by modulating the V.26bis modulator with a sequence of 02 02 ... 02 bit pairs (dibits). This produces line spectrums at 1800, 600, 1200, 2400 and 3000 Hz. The P1800 signal is terminated by modulating dibits sequence 3202.

In the case of half duplex operation, the P 1800 signal is the first signal sent by the Initiating STU-III in place of 2100Hz ESD/ESCD tone in the full duplex mode. The half duplex P1800 consists of two segments, the first segment is 1024 bit long and second segment is 784 bit long with a carrier off period of 256 bits in between. The first 1024 bits (512 dibits) of P1800 signal is not terminated with 3202 dibits pattern, but all the subsequent P1800 signal preceding the half duplex transmission in both directions will contain the 3202 transition dibit pattern at its end.

The STU-III terminal, if configured, will include three 180° phase reversals (modulating by dibit 01) near the beginning part of this signal (precisely at 32, 64 and 96 dibit positions) to indicate the enhanced service capability (alternate mode operation). Since the SCIB protocol in this specification supports does not support the alternate mode operation, the V.26bis demodulator shall ignore the phase reversals and the modulator shall not regenerate the phase reversals.

19. Scramble ones SRC 1 (GPA) Signal

The SRC 1 signal bit sequence is generated by a 23-bit GPA scrambler, seeded by a Seed Vector as follows:

| Scrambler Polynomial | X-23 + X-5 + 1 |
|---|---|
| Seed Vector | 01000100010001011100010 |

20. Scramble ones SRC1 (GPC) Signal

The SRC1 signal bit sequence is generated by a 23-bit GPC scrambler, seeded by a Seed Vector as follows:

| Scrambler Polynomial | X-23 + X-23 + 1 |
|---|---|
| Seed Vector | 01000100010001011100010 |

21. Start of Message (SOM) Signal

The SOM signal is used in half duplex operation and has two patterns. The initiator SOM consists of following pattern (in dibits sequence):

1332 0020 1202 2132 2032 1023 1312 1222

The responder SOM sequence is a inversion of the initiator's SOM as follows:

2001 3313 2131 1201 1301 2310 2021 2111

22. V.26bis Modulation Scheme

The ITU-T V.26bis modem scheme is used by the STU-III for 2400 bit/s operation, except that the training sequence of the standard V.26bis modem is replaced by the SCR1 GPA and SCR1 GPC sequences as defined in the previous paragraphs.

## Claims

1. A method of initiating a secure call between a first secure terminal unit and a second secure terminal unit over a digital transmission link, the first secure terminal unit being connected to a first secure interface unit and the second secure terminal unit being connected to a second secure interface unit, the method comprising:

detecting a first tone signal in a signal sent to the first secure interface unit from the first secure terminal unit;
transmitting a switching initiate request from the first secure interface unit to the second secure interface unit in response to the detected first tone signal;
returning a switching acknowledgement from the second secure interface unit to the first secure interface unit in response to the switching initiate request; and
transmitting a first control message packet from the first secure interface unit to the second secure interface unit so long as the first tone signal is detected by the first secure interface unit.

2. The method of claim 1, further comprising:

voice encoding the signal sent to the first secure terminal unit;

wherein detecting further comprises detecting a predetermined parameter pattern in the voice encoded signal that indicates the presence of the first tone signal; and
further comprising:

producing a secure transmission request bit in response to the detected predetermined parameter pattern;

wherein transmitting the switching initiate request further includes transmitting the switching initiate request in response to the detected first tone signal and the secure transmission request bit.

3. The method of claim 1 or 2, wherein transmitting the switching initiate request comprises transmitting ten frames of the switching initiate request.

4. The method of any preceding claim, further comprising:

switching the second secure interface unit from a normal mode to a secure mode after returning the switching acknowledgement from the second secure interface unit to the first secure interface unit.

5. The method of any preceding claim, further comprising:

switching the first secure interface unit from a normal mode to a secure mode in response to the received switching acknowledgement.

6. The method of any preceding claim, further comprising:

sending a regenerated first tone signal from the second secure interface unit to the second secure terminal unit in response to the received switching initiate request;
detecting the regenerated first tone signal by the second secure terminal unit;
receiving a second tone signal sent from the second secure terminal unit to the second secure interface unit in response to the regenerated first tone signal; and
transmitting a second control message packet from the second secure interface unit to the first secure interface unit in response to the second tone signal.

7. The method of claim 6, further comprising:

sending a regenerated second tone signal from the first secure interface to the first secure terminal unit in response to the received second control message packet.

8. The method of claim 7, further comprising:

detecting termination of the first tone signal by the first secure interface unit;
stopping transmission of the first control message packet and generating a third control message packet in response to the detected termination of the first tone signal;
transmitting the third control message packet from the first secure interface unit to the second secure interface unit; and
terminating the regenerated first tone signal from the second secure interface unit to the second secure terminal unit in response to the received third control message packet.

9. The method of claim 8, further comprising:

receiving a first scramble signal sent from the second secure terminal unit to the second secure interface unit in response to the termination of the regenerated first tone signal;
transmitting a fourth control message packet from the second secure interface unit to the first secure interface unit in response to the received first scramble signal;
regenerating the first scramble signal by the first secure interface unit in response to the received fourth control message packet; and
sending the regenerated first scramble signal from the first secure interface unit to the first secure terminal unit.

10. The method of claim 9, further comprising:

detecting a dropped carrier by the second secure terminal unit after receiving the first scramble signal;
stopping the fourth control message packet and generating the third control message packet in response to the detected dropped carrier;
transmitting the third control message packet from the second secure interface unit to the first secure interface unit; and
dropping a carrier signal from the first secure interface unit to the first secure terminal unit in response to the received third control message packet.

11. The method of claim 10, further comprising:

detecting the first tone signal sent from the first secure terminal unit to the first secure interface unit in response to the dropped carrier signal from the first secure interface unit;

encoding the first control signal as the first control message packet by the first secure interface unit;

transmitting the first control message packet from the first secure interface unit to the second secure interface unit;

regenerating the first tone signal by the second secure interface unit in response to the received first control message packet; and

sending the regenerated first tone signal from the second secure interface unit to the second secure terminal unit.

12. The method of claim 11, further comprising:

receiving a second scramble by the first secure interface unit sent from the first secure terminal unit upon completion of the first tone signal;

transmitting a fifth control message packet from the first secure interface unit to the second secure interface unit in response to the second scramble signal;

regenerating the second scramble signal by the second secure interface unit in response to the fifth control message packet; and

sending the regenerated second scramble signal from the second secure interface unit to the second secure terminal unit.

13. The method of claim 12, further comprising:

transmitting a single sixth control message packet from the first secure interface unit to the second secure interface unit;

transmitting demodulated data from the first secure interface unit to the second secure interface unit using a first data frame after transmitting the single sixth control message packet;

remodulating the data by the second secure interface unit in response to the single sixth control message packet; and

sending the remodulated data from the second secure interface unit to the second secure terminal unit.

14. The method of claim 12, further comprising:

receiving the first scramble signal sent from the second secure terminal unit to the second secure interface unit in response to termination of the second scramble signal;

transmitting the fourth control message packet from the second secure interface unit to the first secure interface unit in response to the first scramble signal;

regenerating the first scramble signal by the first secure interface unit in response to the fourth control message packet; and

sending the regenerated first scramble signal from the first secure interface unit to the first secure terminal unit.

15. A secure interface unit operable in a voice communication mode and a secure communication mode, comprising:

a voice encoder to encode a signal from a local secure terminal unit in the voice communication mode and transmitting the encoded signal to a remote secure interface unit;

a secure protocol function module to communicate with the local secure terminal unit and the remote secure interface unit in the secure communication mode;

a voice encoder parameter analyzer to produce a bit flag in response to an encoded tone signal detected in the encoded signal;

a transmit switch to toggle from an output of the voice encoder to an output of the secure protocol function module; and

a switch-in initiate detector to cause the transmit switch to toggle from the output of the voice encoder to the output of the secure protocol function module in response to detection of the tone signal and the produced bit flag.

16. The secure interface unit of claim 15, wherein the voice encoder comprises an AMBE+2 encoder.

17. The secure interface unit of claim 15 or 16, wherein the voice encoder parameter analyzer produces the bit flag in response to the encoded tone signal detected in the encoded signal according to:

$$E(i) = \sum_{j=1}^{n} w_j * |p_j(i) - P_j|$$

wherein the predetermined parameter pattern template is: P1, P2, ... Pn, the voice encoder output for the $i^{th}$ frame is p1(i), p2(i), ... pn(i), and the weighted error vector is E(i); and

a decision value to produce the bit flag ($D_{ESD/ESCD}$) can be derived based on taking an average of E(i) over N frames together with a threshold THD according to:

$$D_{ESD/ESCD} = \begin{cases} 1, & \text{if } 1/N(\sum_{i=0}^{N} E(i)) > THD \\ \\ 0, & \text{Else} \end{cases}$$

wherein $P_j$'s, $w_j$'s , N and THD are empirical values depending on the specific family member of the voice encoder.

18. The secure interface unit of any of claims 15 to 17, further comprising:

a receive voice encoder parameter analyzer to produce a delay bit flag in response to a received encoded tone signal detected in a received signal from the remote secure interface unit, the delay bit flag to cause the switch-in initiate detector to delay causing the transmit switch to toggle from the output of the voice encoder to the output of the secure protocol function module in response to detection of the tone signal and the produced bit flag.

19. Software on a computer usable medium that includes instructions to cause a processorto:

produce a secure communication initiate request;
identify a secure communication switching acknowledgement in response to the produced secure communication switching request;
produce a secure transmission request bit in response to a secure transmission tone signal; and
produce a control message packet acknowledging identification of the secure communication switching acknowledgement if the transmission request bit is produced.

20. A computer program for implementing the method of any of claims 1 to 14.

FIG. 1

# FIG. 2

**FIG. 3**

FIG. 4

400

```
┌─────────────────────┐
│    INITIATE CALL     │   402
└─────────────────────┘
           │
           ▼
┌─────────────────────┐
│ INITIATE SECURE CALL │   404
└─────────────────────┘
           │
           ▼
┌─────────────────────┐
│    TRAINING PHASE    │   406
└─────────────────────┘
           │
           ▼
┌─────────────────────┐
│  VARIABLE EXCHANGE   │   408
│        PHASE         │
└─────────────────────┘
           │
           ▼
┌─────────────────────┐
│  CRYPTO SYNCH PHASE  │   410
└─────────────────────┘
           │
           ▼
┌─────────────────────┐
│ COMMUNICATE IN SECURE│   412
│         MODE         │
└─────────────────────┘
           │
           ▼
┌─────────────────────┐
│ TERMINATE SECURE CALL│   414
└─────────────────────┘
```

FIG. 5

EP 1 592 202 A1

Initiating STU-III to SIU **601**

Initiating SIU to STU-III

Initiating SIU to Responding SIU

Responding SIU to Initiating SIU **602**

Responding SIU to STU-III

**603B**

Responding STU-III to SIU

| 0.4 or 1 sec | 4096 bits |

| ESD/ESCD | | | ESD/ESCD | SCR1-GPC | Crypto Training/Data |

**604** | **607** 90ms | **608** | **614** | **616** | **617** | **620** | **623** | **628** | **631**

| Silence | P1800 signal | SCR1-GPA | | | | | SCR1-GPA | Data |

200ms

| SWI-2400 | CMP(ESCD) | CMP(Idle) | CMP(ESCD) | CMP(GPC) | | Tranparent_2400 |

**603A** 260ms | **606** | **609** | **613** | **615** | **618** | **621** | **624** | **627** | **630**

| SWA | CMP(Idle) | CMP(P1800) | CMP(GPA) | CMP(Idle) | | CMP(GPA) | Transparent_2400 |

80ms | | | | | | **626** | **629**

| ESD/ESCD | SCR1-GPC | Cryto Training/Data |

**605** | **610** 150ms | **611** | **612** | **622** | **625**

4096 bits

**619** | 704 bits

1 sec | P1800 signal | SCR1-GPA | 0-0.3 ms | SCR1-GPA | Data

6

Legend: ▮ P1800 phase reversal

▯ CMP(Sync)

**Full Duplex Interoperable Mode Call Establishment**

FIG. 6

FIG. 7

Half Duplex 2.4kbit/s SIU/STU-III Secure Call Establishment

Legend:
- ■ EOM Pattern
- ⊠ SOM Pattern
- ▯ CMP(Sync)

FIG. 8

Full Duplex Call to Half Duplex STU-III

**European Patent Office**

# EUROPEAN SEARCH REPORT

Application Number

EP 05 25 2659

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 404 394 A (DIMOLITSAS ET AL) 4 April 1995 (1995-04-04) | 1-5, 15-17, 19,20 | H04L29/06 H04K1/00 |
| A | * abstract; figures 1,12 * * column 10, line 14 - line 65 * * column 12, line 1 - column 14, line 7 * ----- | 6-14,18 | |
| D,X | US 5 963 621 A (DIMOLITSAS ET AL) 5 October 1999 (1999-10-05) * abstract; figures 1,12 * * column 12, line 7 - column 21, line 33 * ----- | 1-5, 15-17, 19,20 | |

| TECHNICAL FIELDS SEARCHED (Int.Cl.7) |
|---|
| H04L H04K |

The present search report has been drawn up for all claims

| Place of search | Date of completion of the search | Examiner |
|---|---|---|
| Berlin | 25 August 2005 | Figiel, B |

EPO FORM 1503 03.82 (P04C01)

EP 1 592 202 A1

**ANNEX TO THE EUROPEAN SEARCH REPORT
ON EUROPEAN PATENT APPLICATION NO.**

EP 05 25 2659

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2005

| Patent document cited in search report | | Publication date | Patent family member(s) | | Publication date |
|---|---|---|---|---|---|
| US 5404394 | A | 04-04-1995 | AU | 684305 B2 | 11-12-1997 |
| | | | AU | 7549594 A | 20-12-1994 |
| | | | CA | 2163023 A1 | 08-12-1994 |
| | | | EP | 0700617 A1 | 13-03-1996 |
| | | | IL | 109668 A | 18-03-1997 |
| | | | SG | 42826 A1 | 17-10-1997 |
| | | | WO | 9428654 A2 | 08-12-1994 |
| | | | US | 5724414 A | 03-03-1998 |
| | | | US | 5963621 A | 05-10-1999 |
| US 5963621 | A | 05-10-1999 | US | 5724414 A | 03-03-1998 |
| | | | US | 5404394 A | 04-04-1995 |
| | | | AU | 684305 B2 | 11-12-1997 |
| | | | AU | 7549594 A | 20-12-1994 |
| | | | CA | 2163023 A1 | 08-12-1994 |
| | | | EP | 0700617 A1 | 13-03-1996 |
| | | | IL | 109668 A | 18-03-1997 |
| | | | SG | 42826 A1 | 17-10-1997 |
| | | | WO | 9428654 A2 | 08-12-1994 |

For more details about this annex : see Official Journal of the European Patent Office, No. 12/82